# EUROPÄISCHE PATENTANMELDUNG

(11) **EP 1 426 210 A1**
(43) Veröffentlichungstag der Anmeldung: **09.06.2004**
(21) Anmeldenummer: 03025721.6
(22) Anmeldetag: 06.11.2003
(51) Int. Cl.: B60G 17/015, B60G 17/056, B60G 21/055, B60G 21/073, B60G 21/10

(54) **Hydraulisches Stabilisierungssystem**

(30) Priorität: 04.12.2002 DE 10256682
(71) Anmelder: Bayerische Motoren Werke Aktiengesellschaft, 80809 München (DE)
(72) Erfinder: Puschmann, Peter, 80935 München (DE); Bruns, Hartmut, 85622 Weissenfeld (DE); Kasaj, Roland, 80995 München (DE)

(57) **Zusammenfassung**

Die Erfindung betrifft ein hydraulisches Stabilisierungssystem, insbesondere für ein Fahrwerk eines Kraftfahrzeugs, aufweisend eine hydraulische Energieversorgungseinrichtung (2), welche mit einer Steuerventileinrichtung (8) in Verbindung steht und zumindest einem Aktuator (9, 10), welcher hydraulisch mit der Steuerventileinrichtung (8) in Verbindung steht und mechanisch mit dem Fahrwerk gekoppelt ist, wobei die Steuerventileinrichtung (8) zumindest eine Richtungsventileinrichtung aufweist, wobei die Richtungsventileinrichtung aus zumindest einem Proportionalventil besteht.

## Beschreibung

Die Erfindung betrifft ein hydraulisches Stabilisierungssystem, insbesondere für ein Fahrwerk eines Fahrzeuges nach dem Oberbegriff des Anspruchs 1.

Ein derartiges hydraulisches Stabilisierungssystem ist beispielsweise aus der DE 100 09 918 A1 bekannt. Dieses hydraulische Stabilisierungssystem weist eine hydraulische Energieversorgungseinheit und eine Steuerventileinrichtung mit einem Richtungsventil auf. Die Steuerventileinrichtung steht ausgangsseitig mit Aktuatoren zur Beeinflussung des Rollneigungswinkels eines Fahrzeugs an einer Vorderachse bzw. einer Hinterachse in Verbindung. Neben dem Richtungsschaltventil weist die Steuerventileinrichtung Druckbegrenzungsventile auf, welche den maximalen Versorgungsdruck für den Vorderachsaktuator und den Hinterachsaktuator festlegen. Weiterhin ist in der Steuerventileinrichtung eine so genannte Fail-Save-Ventileinrichtung angeordnet, welche beispielsweise bei einem Stromausfall im Kraftfahrzeug einen unkritischen Betriebszustand des Stabilisierungssystems sicherstellt. Weiterhin sind verschiedene Drucksensoren und ggf. Rückschlagventile vorhanden. Bei diesem System ist von Nachteil, dass in den Druckleitungen von und zu den Aktuatoren Druckstöße in den Hydraulikleitungen beim Umschalten des Richtungsschaltventils entstehen. Dies wirkt sich somit nachteilig auf die Geräuschentwicklung im Fahrzeug und nachteilig auf den resultierenden Fahrkomfort im Falle eines Lastwechsels aus.

Weiterhin ist aus der DE 19846394 C1 eine Stabilisierungseinrichtung für ein Fahrzeug bekannt, welche ebenfalls eine Steuerventileinrichtung mit einem Richtungsschaltventil aufweist. Eine solche Stabilisierungseinrichtung weist im Wesentlichen die oben genannten Nachteile auf.

Aus der EP 0850151 B1 ist eine Einrichtung zu Rollstabilisierung eines Fahrzeugs bekannt, welche ebenfalls eine Steuerventileinrichtung aufweist. Die Steuerventileinrichtung enthält als Richtungsventile zur Ansteuerung der auf das Fahrwerk einwirkenden Aktuatoren Schaltventile, welche eine schlagartige Strömungsrichtungsumkehr bewirken. Auch diese Einrichtung zur Rollstabilisierung eines Fahrzeugs weist im Lastwechselfall ein hohes Geräuschniveau auf und wirkt sich somit nachteilig auf den Akustikkomfort und die Umschaltcharakteristik aus.

Aufgabe der Erfindung ist es, ein hydraulisches Stabilisierungssystem, insbesondere für ein Fahrwerk eines Kraftfahrzeugs anzugeben, welches einen verbesserten Akustikkomfort und eine stoßfreie Lastwechselschaltcharakteristik sicherstellt. Weiterhin soll das erfindungsgemäße Stabilisierungssystem einfach und kostengünstig aufgebaut sein.

Diese Aufgabe wird mit einem hydraulischen Stabilisierungssystem mit den Merkmalen des Anspruchs 1 gelöst. Vorteilhafte Ausführungsformen sind in den Unteransprüchen angegeben.

Erfindungsgemäß wird diese Aufgabe dadurch gelöst, dass die Steuerventileinrichtung eine Richtungsventileinrichtung aufweist, welche zumindest ein Proportionalventil in der Funktion als Richtungsventil enthält.

Gemäß einer besonderen Ausführungsform der erfindungsgemäßen Stabilisierungseinrichtung weist die Steuerventileinrichtung eine Richtungsventileinrichtung bestehend aus zumindest einem Proportionaldruckbegrenzungsventil auf.

Gemäß einer weiteren Ausführungsform der erfindungsgemäßen Stabilisierungseinrichtung weist die Steuerventileinrichtung als Richtungsventileinrichtung ein oder mehrere Proportionaldruckminderventile auf.

Eine weitere bevorzugte Ausführungsform der erfindungsgemäßen Stabilisierungseinrichtung weist eine Steuerventileinrichtung mit zumindest einem Proportionalwegeventil als Richtungsventileinrichtung auf.

Weiterhin können die Steuerventileinrichtungen gemäß der Erfindung zusätzlich zu den Richtungsventileinrichtungen Sicherheitsventileinrichtungen (so genannte Fail-Save-Ventileinrichtungen) enthalten.

Im Folgenden wird die Erfindung anhand der Zeichnung beispielhaft näher erläutert. Es zeigen:
Fig. 1 ein hydraulisches Prinzipschaltbild einer ersten Ausführungsform des erfindungsgemäßen Stabilisierungssystems, aufweisend zwei Proportionaldruckbegrenzungsventile je Aktuator als Richtungsventileinrichtung;
Fig. 2 eine weitere Ausführungsform des erfindungsgemäßen Stabilisierungssystems gemäß Fig. 1 mit einer hydraulischen Reihenschaltung der Proportionaldruckbegrenzungsventile;
Fig. 3 eine weitere Ausführungsform des erfindungsgemäßen Stabilisierungssystems gemäß Fig. 2;
Fig. 4 eine Richtungsventileinrichtung eines erfindungsgemäßen Stabilisierungssystems, aufweisend zumindest zwei Proportionaldruckminderventile je Aktuator;
Fig. 5 eine weitere Ausführungsform des erfindungsgemäßen hydraulischen Stabilisierungssystems mit einer Richtungsventileinrichtung, welche aus Proportionalwegeventilen aufgebaut ist;
Fig. 6 eine weitere Ausführungsform des erfindungsgemäßen hydraulischen Stabilisierungssystems gemäß Fig. 5.

Ein erfindungsgemäßes hydraulisches Stabilisierungssystem 1 weist eine hydraulische Energieversorgungseinrichtung 2 mit einer mechanischen Antriebseinrichtung 3 und zumindest einer Pumpe 4 auf, welche über Saugleitungen 5 mit einem Vorratsbehälter 6 für Hydraulikfluid verbunden sind. Von den Pumpen 4 gehen Druckleitungen 7 ab, welche mit entsprechenden Druckleitungseingängen einer Steuerventileinrichtung 8 in Verbindung stehen.

Die Steuerventileinrichtung 8 steht ausgangsseitig mit einem Vorderachsaktuator 9 und einem Hinterachsaktuator 10 in Verbindung. Die Aktuatoren 9, 10 sind als Zweikammer-Aktuatoren ausgebildet und stehen abtriebsseitig mit geeigneten Fahrwerkselementen, z. B. Stabilisatorabschnitten, in Verbindung, sodass durch Betätigung der Aktuatoren eine Rollbewegung des Fahrzeugs erzeugt oder einer solchen entgegengewirkt werden kann. Kammern 9a, 9b, 10a, 10b der Aktuatoren 9, 10 stehen mit Drucksensoren 11 in Verbindung. Jede der Kammern 9a, 9b; 10a, 10b steht über eine korrespondierende Druckleitung 12a, 12b; 13a, 13b mit der Steuerventileinrichtung 8 in Verbindung. Die korrespondierenden Leitungen 12a, 12b bzw. die Leitungen 13a, 13b sind mit einer Brückenleitung 14 miteinander verbunden. In der Brückenleitung 14 sitzt ein 2/2-Schaltventil 15, welches in einer ersten Schaltstellung die Brückenleitung 14 durchschaltet und in einer zweiten Schaltstellung die Brückenleitung 14 unterbricht.

Die Steuerventileinrichtung 8 ist wie folgt aufgebaut:

Jede der Druckleitungen 7 ist mit einer korrespondierenden Leitung 12a, 12b bzw. 13a, 13b über Durchgangsleitungen 20a, 20b bzw. 21a, 21b der Steuerventileinrichtung 8 direkt verbunden. Von jeder der Durchgangsleitungen 20a, 20b bzw. 21a, 21b zweigt eine Zweigleitung 22a, 22b bzw. 23a, 23b ab, welche in eine gemeinsame Rücklaufleitung 24 münden. Die Rücklaufleitung 24 steht mit dem Vorratsbehälter 6 in Verbindung.

In jeder der Zweigleitungen 22a, 22b bzw. 23a, 23b sitzt ein Proportionaldruckbegrenzungsventil 25, dessen Steuerschieber 26 einendig über einen Magneten, insbesondere einen Elektromagneten, ansteuerbar ist und anderendig mit eine Feder 28 in Verbindung steht. Von den Zweigleitungen 22a, 22b bzw. 23a, 23b zweigen in Strömungsrichtung von den Proportionaldruckbegrenzungsventilen 25 jeweils eine Vorsteuerleitung 29 ab, welche anderendig mit einer Schieberkammer (nicht gezeigt) des Steuerschiebers 26 in Verbindung steht, sodass der Steuerschieber 26 mit einem Vorsteuerdruck beaufschlagbar ist.

Somit wird in Abhängigkeit der Ansteuerung der Magneten 27 über die Proportionaldruckbegrenzungsventile 25 in den Durchgangsleitungen 20a, 20b bzw. 21a, 21b und somit in den Aktuatorkammern 9a, 9b bzw. 10a, 10b ein der Fahrsituation angepasster Betriebsdruck eingestellt. Die Regelcharakteristik eines Proportionaldruckbegrenzungsventils 25 weist dabei keine Sprungstellen oder Unstetigkeiten auf, sodass Druckschwankungen innerhalb der Aktuatorkammern 9a, 9b; 10a, 10b immer stoßfrei, schlagfrei und sanft erfolgen. Somit sind unerwünschte akustische Beeinträchtigungen zuverlässig verhindert. Weiterhin nimmt das erfindungsgemäße hydraulische Stabilisierungssystem 1 nicht schlagartig, sondern ruckfrei und sanft Einfluss auf die über die Aktuatoren 9, 10 einzustellende Stabilisatorvorspannung.

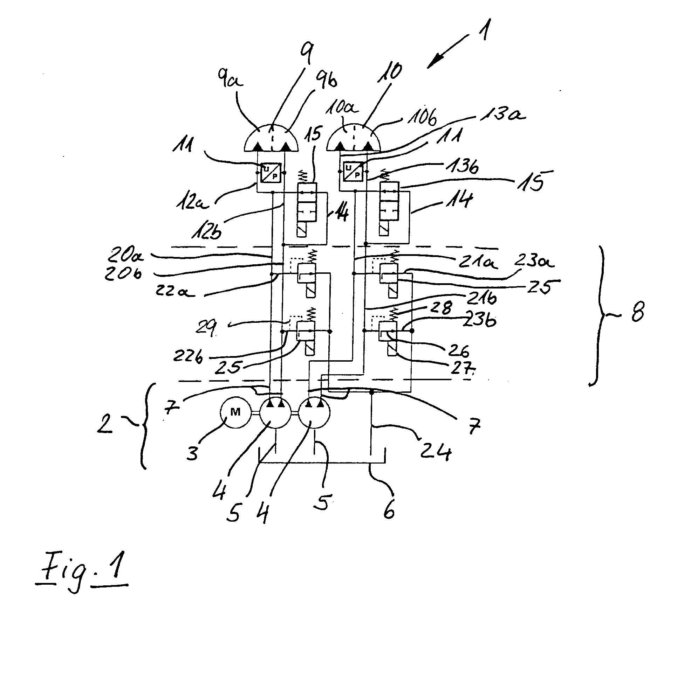

Die Ausführungsform gemäß Fig. 1 ist als so genanntes Vierkreis-System ausgebildet, bei dem jede Arbeitskammer 9a, 9b, 10a, 10b über eine eigene Hydraulikdruckversorgung verfügt, so dass der erforderliche Druck in jedem Hydraulikkreis über ein Proportionaldruckbegrenzungsventil 25 einstellbar ist. Die zugehörige Pumpe der hydraulischen Energieversorgungseinheit 2 ist bei diesem Ausführungsbeispiel als so genannte Zweikammer-Tandem-Pumpe ausgebildet.

Besonders vorteilhaft ist, dass eine solche Steuerventileinrichtung 8 auf Grund der sanften Regelungscharakteristiken der Proportionaldruckbegrenzungsventile 25 eine deutlich verbesserte aktive Akustik aufweist. Weiterhin besteht der Vorteil, dass jede Aktuatorkammer unabhängig von einer anderen ansteuerbar ist. Eine Steuerventileinrichtung gemäß Fig. 1 eignet sich insbesondere zur Kombination mit einer volumenstrom-basierten hydraulischen Energieversorgungseinheit.

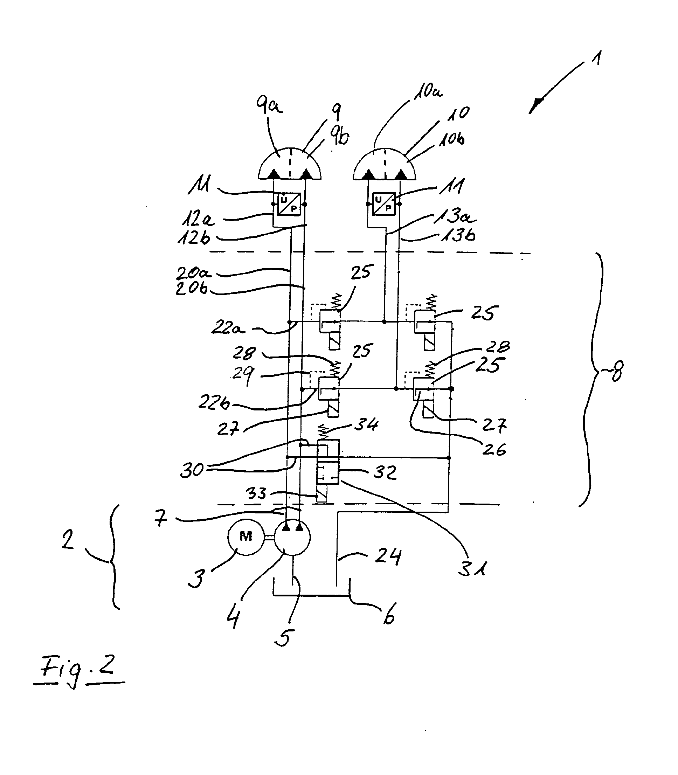

Die Ausführungsform gemäß Fig. 2 zeichnet sich dadurch aus, dass in den Zweigleitungen 22a, 22b je zwei Proportional-Druckbegrenzungsventile 25 in Reihe geschaltet angeordnet sind. Zwischen den Proportional-Druckbegrenzungsventilen 25 der Zweigleitung 22a zweigt die Druckleitung 13a für die Aktuatorkammer 10a des Hinterachsaktuators 10 ab. Zwischen den Proportional-Druckbegrenzungsventilen 25 der Zweigleitung 22b zweigt die Druckleitung 13b für die Aktuatorkammer 10b des Hinterachsaktuators 10 ab. Somit werden beide Kammern 10a, 10b des Hinterachsaktuators 10 mit einem gegenüber dem Druckniveau der korrespondierenden Kammern 9a, 9b abgesenkten Druckniveau beaufschlagt. Eine derartige Druck verminderte Ansteuerung des Hinterachsaktuators 10 stellt sicher, der Druck im Vorderachsaktuator 9 höher ist als derjenige im Hinterachsaktuator 10, so dass das Fahrzeug ein untersteuerndes Fahrverhalten aufweist.

Die Ausführungsform gemäß Fig. 2 weist keine Sicherheitsventileinrichtungen 15 und Brückenleitungen 14 auf. Von den Durchgangsleitungen 20a, 20b zweigen Brückenleitungen 30 ab, welche anderendig mit der Rücklaufleitung 24 in Verbindung stehen. In den Brückenleitungen 30 ist ein Pumpen-Bypass-Ventil 31 angeordnet, welches in der so genannten 3/2-Bauform ausgebildet ist, d. h. das Bypass-Ventil 31 verfügt über drei Anschlüsse und zwei Schaltstellungen. In einer ersten Schaltstellung, wie es in Fig. 2 dargestellt ist, sind die Durchgangsleitungen 20a, 20b mit der Rücklaufleitung 24 hydraulisch verbunden, sodass die Pumpe 4 Hydraulikfluid nahezu drucklos umwälzen kann.

In einer zweiten Schaltstellung, in der ein Schieber 32 mittels eines Magneten 33 gegen den Druck einer Feder 34 bewegt wird, sind die Brückenleitungen 30 unterbrochen, sodass die Leitungen 20a, 20b sowie die Proportionaldruckbegrenzungsventile 25 und somit die Aktuatoren 9, 10 druckbeaufschlagt sind. Je nach Ansteuerung der Proportionaldruckbegrenzungsventile 25 wird in den unterschiedlichen Kammern 9a, 9b bzw. 10a, 10b ein der Fahrsituation angepasster Hydraulikfluiddruck zur Verfügung gestellt.

Die Ausführungsform gemäß Fig. 2 der erfindungsgemäßen Richtungsventileinrichtung 8 stellt ein so genanntes hydraulisches Zwei-Kreis-System dar, welches sich insbesondere zur Kombination mit eine Volumenstrombasierten hydraulischen Energieversorgungseinheit 2 eignet. Bei diesem Zwei-Kreis-System ist jeweils eine (linke) Aktuatorkammer 9a, 10a und eine (rechte) Aktuatorkammer 9b, 10b in einem Hydraulikkreis angeordnet, sodass von einem Hydraulikkreis jeweils korrespondierende Aktuatorkammern zweier Aktuatoren angesteuert werden.

Bei dieser Ausführungsform ist besonders vorteilhaft, dass aufgrund der Proportionaldruckbegrenzungsventile eine deutlich verbesserte aktive Akustik erreichbar ist. Weiterhin sind jeweils die beiden Kammern eines Aktuators unabhängig voneinander ansteuerbar, sodass eine getrennte Richtungsventilfunktion verwirklicht ist. Außerdem konnte festgestellt werden, dass die Ausführungsform der Richtungsventileinrichtung gemäß Fig. 2 über eine bessere Systemdynamik verfügt und einen niedrigeren Energiebedarf als bekannte Systeme aufweist.

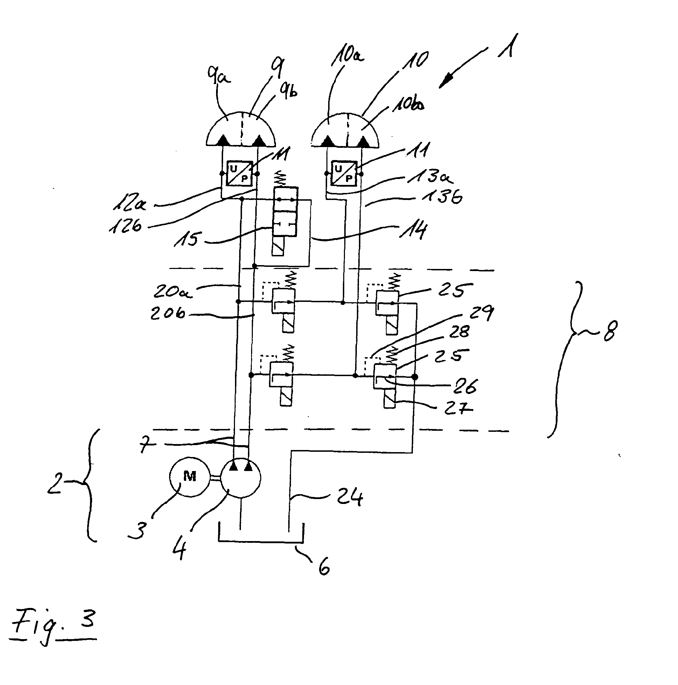

Eine weitere Ausführungsform des erfindungsgemäßen hydraulischen Stabilisierungssystems gemäß Fig. 3 ist ähnlich aufgebaut wie die Ausführungsform gemäß Fig. 2, sodass zur Vermeidung von Doppelbeschreibung auf die Beschreibung der Fig. 2 voll inhaltlich verwiesen wird.

Bei dieser Ausführungsform gemäß Fig. 3 wie auch bei der Ausführungsform gemäß Fig. 2 sind jeweils zwei Proportionaldruckventile in Reihe hintereinander geschaltet, wobei ein Druckabgriff für den zweiten, insbesondere den Hinterachsaktuator 10 zwischen den Proportionaldruckbegrenzungsventilen erfolgt. Hierdurch ist sichergestellt, dass der Hinterachsaktuator 10 immer einen im Vergleich zum Vorderachsaktuator 9 verminderten Betriebsdruck aufweist. Insofern handelt es sich bei den Ausführungsformen gemäß Fig. 2 und 3 um so genannte hydraulische Zweikreis-Systeme, bei denen jeweils korrespondierende Kammern 9a, 10a der beiden Aktuatoren 9, 10 von einem Hydraulikkreis versorgt werden. Im Unterschied zur Ausführungsform gemäß Fig. 2 weist die Ausführungsform gemäß Fig. 3 analog zu der gemäß Fig. 1 ein Sicherheitsventil 15 auf, welches in einer Brückenleitung 14 angeordnet ist, wobei die Brückenleitung 14 die Druckleitungen 12a und 12b des Vorderachs-Aktuators 9 miteinander verbindet. Ein Sicherheitsventil 15 für den Hinterachsaktuator 10 ist dagegen nicht notwendig.

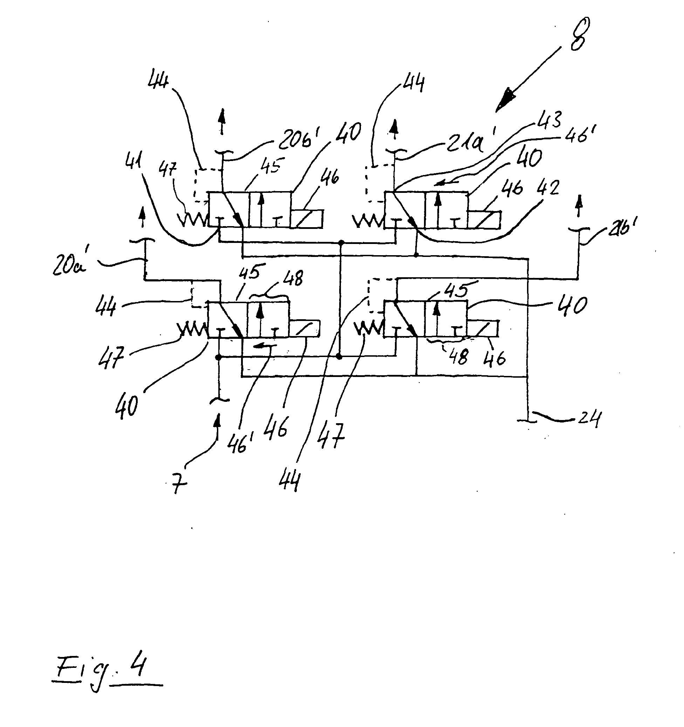

Eine weitere erfindungsgemäße Ausführungsform des hydraulischen Stabilisierungssystems 1 (Fig. 4) weist ein Steuerventileinrichtung 8 auf, welches über Druckleitungen 7 mit einer hydraulischen Energieversorgungseinrichtung (nicht gezeigt) in Verbindung steht. Das Steuerventileinrichtung weist vier Ausgangsleitungen 20a', 20b', 21a', 21b' auf. Die Ausgangsleitungen 20a', 20b', 21a', 21b' stehen jeweils mit einer Kammer (nicht gezeigt) eines Vorder- bzw. Hinterachsaktuators (nicht gezeigt) in Verbindung. Das Steuerventileinrichtung 8 gemäß Fig. 4 weist als Richtungsventileinrichtung eine Anordnung aus Proportionaldruckminderventilen 40 auf, welche über drei Anschlüsse und zwei Ventilextremstellungen verfügen. Die Proportionaldruckminderventile 40 weisen drei Anschlüsse auf, wobei jeweils ein Druckeingang 41 mit der Druckleitung 7 verbunden ist. Ein Ausgang 42 ist mit der Rücklaufleitung 24 verbunden. Ein Steuerausgang 43 ist mit den Leitungen 20a', 20b' bzw. 21a' bzw. 21b' verbunden. Von den Leitungen 20a', 20b', 21a', 21b' zweigt jeweils eine Vorsteuerleitung 44 ab, welche hydraulisch mit dem Schieber 45 jeweils eines Proportionaldruckminderventils 40 verbunden ist.

Jedes Proportionaldruckminderventil 40 verfügt über einen Magneten 46, welcher den Schieber 45 in eine Pfeilrichtung 46' gegen den Druck einer Feder 47 und den in der Vorsteuerleitung 44 vorhandenen Druck bewegen kann. In einer Extremendstellung ist der Schieber 45 derart positioniert, dass ein Schieberabschnitt 48 mit den Anschlüssen 41, 42, 43 korrespondiert. In dieser Stellung liegt der volle Druck der Druckleitungen 7 an den Aktuatorkammern an.

In jeder Zwischenstellung zwischen der in Fig. 4 dargestellten Ausgangslage der Proportionaldruckminderventile 40 und der oben beschriebenen zweiten Extremlage, bei der der Schieberabschnitt 48 mit den Anschlüssen 41, 42, 43 in Verbindung steht, erfolgt eine zum Steuerstrom des Magneten 46 proportionale Druckregelung in den Leitungen 20a', 20b', 21a', 21b'. Der in den Leitungen 20a', 20b', 21a', 21b' herrschende Druck kann für jede Leitung separat in Abhängigkeit der Stromstärke, welche an dem Magneten anliegt, eingestellt werden, sodass jede Aktuatorkammer 9a, 9b; 10a, 10b individuell mit Druck beaufschlagbar ist.

Die Anordnung gemäß Fig. 4 aus vier Proportionaldruckminderventilen 40, wobei je ein Druckminderventil genau einer Aktuatorkammer 9a, 9b; 10a, 10b zugeordnet ist, ist bis zu den Proportionaldruckminderventilen 40 als hydraulisches Einkreis-System ausgebildet und eignet sich insbesondere zu einer Kombination mit einer Druck-basierten Speicher-Lade-Einheit als hydraulische Energieversorgungseinrichtung, wobei die hydraulische Energieversorgungseinrichtung in dieser Ausführungsform einen Druckspeicher aufweist, dessen Druckniveau durch eine Hydraulikpumpe auf einem Mindestdruckniveau gehalten wird.

Bei dieser Ausführungsform ist von besonderem Vorteil, dass in den Aktuatorkammern 9a, 9b; 10a, 10b auftretende Leckageströme sich nicht auf den in den Kammern vorliegenden Druck auswirken, da ein aufgrund eines Leckagestromes verringerter Druck in den Leitungen 20a', 20b' bzw. 21a', 21b' über die Vorsteuerleitung 44 sofort für eine geänderte Stellung des Schiebers 45 in den Proportionaldruckminderventile 40 derart sorgt, dass aus der Speicher-Lade-Einheit Hydraulikfluid in erhöhtem Maße zu den Kammern der Aktuatoren gefördert wird. Insofern stellt diese Richtungsventileinrichtung eine Leckagestrom-unabhängige, selbst-regulierende Richtungsventileinrichtung dar, sodass eine aufwendige Druckmessung in den Zuleitungen der Aktuatorkammern entfallen kann. Somit ist lediglich über eine Steuereinheit (nicht gezeigt) ein geeigneter Ansteuerungsstrom für den Magneten 46 zur Verfügung zu stellen, welcher Fahrsituations-abhängig ermittelt und den Magneten 46 entsprechender Proportionaldruckminderventile 40 zugeordnet wird.

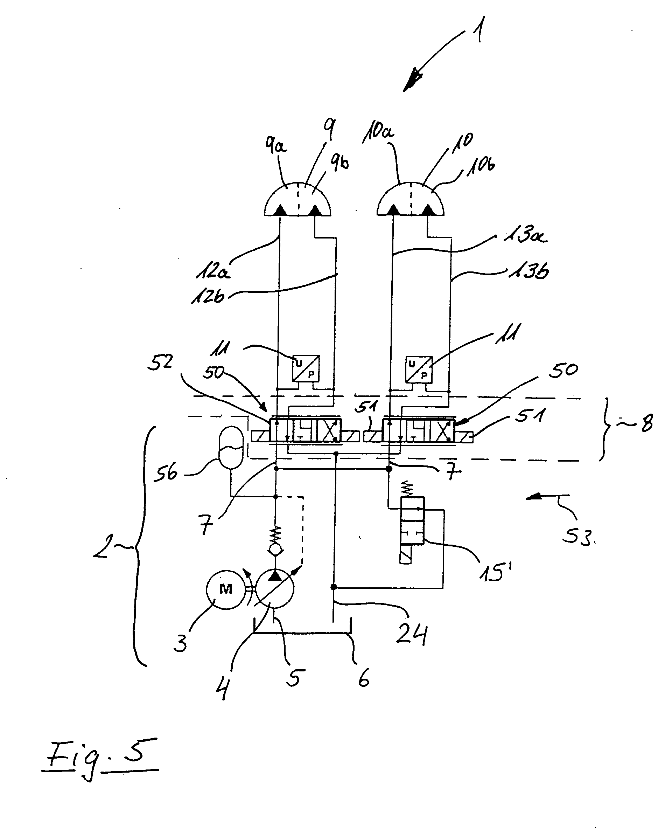

Eine weitere Ausführungsform der erfindungsgemäßen Richtungsventileinrichtung 8 gemäß Fig. 5 weist als Richtungsventile ein Proportionalwegeventil 50 mit zwei entgegengesetzt zueinander wirkenden Magneten 51 auf, wobei in einer ersten Endstellung der Proportionalwegeventile, wie sie in Fig. 5 dargestellt ist, jeweils eine Aktuatorkammer 9a, 10a mit der Druckleitung 7 verbunden ist und die gegenüberliegende Kammer 9b, 10b mit der Rücklaufleitung 24 verbunden ist. Die Richtungsventileinrichtung 8 gemäß Fig. 5 bildet ein hydraulisches Zwei-Kreis-System, wobei je ein hydraulischer Kreis einem Aktuator 9 bzw. 10 zugeordnet ist.

In einer Mittelstellung, wenn ein Schieber 52 der Proportionalwegeventile 50 entlang einer Pfeilrichtung 53 verschoben ist, sind die Druckleitungen 7 blockiert und die Druckversorgungsleitungen 12a, 12b bzw. 13a, 13b mit der Rücklaufleitung 24 verbunden, sodass sämtliche Kammern 9a, 9b, 10a, 10b der Aktuatoren 9, 10 drucklos geschaltet sind.

Bei einer Weiterbewegung des Stempels 52 entlang der Pfeilrichtung 53 in eine zweite Endstellung stehen die Druckleitungen 7 jeweils mit einer Aktuatorkammer 9b bzw. 10b in Verbindung. Die Aktuatorkammern 9a, 10a sind mit der Rücklaufleitung 24 verbunden. Durch den Einsatz von Proportionalwegeventilen 50, bei denen der Verschiebeweg des Schiebers 52 proportional ist zu dem Strom, mit dem die Magneten 51 beaufschlagt werden, eignet sich diese Steuerventileinrichtung 8 in besonderem Maße für die Kombination mit einer Druck-basierten Speicher-Lade-Einheit als hydraulische Energieversorgungseinrichtung 2, wobei die hydraulische Energieversorgungseinrichtung 2 einen Druckspeicher 56 aufweist.

Bei dieser Ausführungsform ist besonders vorteilhaft, dass die Steuerventileinrichtung 8 derart ausgebildet ist, dass jeweils einem Aktuator ein Richtungsventil 50 zugeordnet ist, sodass die Proportionalwegeventile 50 jeweils an den Aktuatoren 9, 10 selbst angebracht werden können, was zu einer erheblichen Bauraum-Einsparung führt. Weiterhin ist von Vorteil, dass bei einer Anordnung der Proportionalwegeventile 50 direkt bei den Aktuatoren 9, 10 weiterhin erheblicher Bauraum eingespart werden kann, weil zu den Aktuatoren 9, 10 dann nur jeweils eine Druckleitung und eine Rücklaufleitung geführt werden muss. Weiterhin konnte festgestellt werden, dass die Ausführungsform gemäß Fig. 5 über eine sehr geringe Verlustleistung verfügt und eine hohe Robustheit aufweist.

Die hydraulische Energieversorgungseinheit 2 gem. Fig. 5 verfügt über eine Sicherheitsventileinrichtung 15', welche als 2/2-Schaltventil ausgebildet ist und eine Verbindung zwischen den Druckleitungen 7 und der Rücklaufleitung 24 herstellen und unterbrechen kann. Diese Sicherheitsventileinrichtung 15' ist somit nach Art eines Pumpen-Bypass-Ventils ausgebildet und stellt bei einem Ruhezustand des hydraulischen Stabilisierungssystems 1 kurze Umpumpwege für die Pumpe 4 sicher, sodass geringe Verlustleistungen anfallen. Weiterhin kann das Bypass-Ventil 15' im Falle einer Störung für eine schlagartige Druckentlastung des Speichers 56 sorgen.

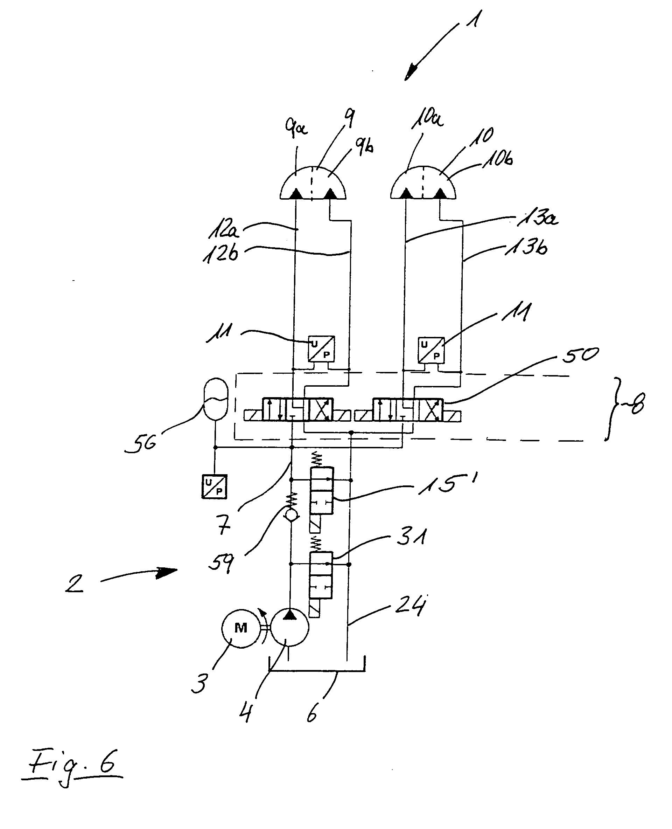

Eine weitere Ausführungsform des hydraulischen Stabilisierungssystems 1 gemäß Fig. 6 ist hinsichtlich der Aktuatoren 9, 10 und der Steuerventileinheit 8 mit der Ausführungsform gemäß Fig. 5 identisch. Im Unterschied zur Ausführungsform gemäß Fig. 5 weist das hydraulische Stabilisierungssystem 1 gemäß Fig. 6 eine Konstantpumpe 4 auf, welche über ein Pumpen-Bypass-Ventil 31 hydraulisch kurzschließbar ist, sodass bei Vorhandensein eines ausreichenden Druckniveaus im Druckspeicher 56 die Pumpe nahezu verlustleistungsfrei Hydraulikfluid umpumpen kann. Hinter einem Kugelrückschlagventil 59 in der Druckleitung 7 sitzt eine Sicherheitsventileinrichtung 15', welche die Druckleitung 7 mit der Rücklaufleitung 24 verbinden kann, sodass im Falle einer Störung der Druckspeicher 56 schnell drucklos geschaltet werden kann.

## Patentansprüche

1. Hydraulisches Stabilisierungssystem, insbesondere für ein Fahrwerk eines Kraftfahrzeugs, aufweisend eine hydraulische Energieversorgungseinrichtung (2), welche mit einer Steuerventileinrichtung (8) in Verbindung steht und zumindest einem Aktuator (9, 10), welcher hydraulisch mit der Steuerventileinrichtung (8) in Verbindung steht und mechanisch mit dem Fahrwerk gekoppelt ist, wobei die Steuerventileinrichtung (8) zumindest eine Richtungsventileinrichtung aufweist, **dadurch gekennzeichnet, dass** die Richtungsventileinrichtung aus zumindest einem Proportionalventil besteht.

2. Stabilisierungssystem nach Anspruch 1, **dadurch gekennzeichnet, dass** das Proportionalventil ein Proportionaldruckbegrenzungsventil (25) ist.

3. Stabilisierungssystem nach Anspruch 1 und/oder 2, **dadurch gekennzeichnet, dass** das Proportionalventil ein Proportionaldruckminderventil (40) ist.

4. Stabilisierungssystem nach einem oder mehreren der vorangegangenen Ansprüche, **dadurch gekennzeichnet, dass** das Proportionalventil ein proportionales Wegeventil (50) ist.

5. Stabilisierungssystem nach einem oder mehreren der vorangegangenen Ansprüche, **dadurch gekennzeichnet, dass** jedem Aktuator (9, 10) mindestens ein Proportionalventil (25, 40, 50) zugeordnet ist.

6. Stabilisierungssystem nach einem oder mehreren der vorangegangenen Ansprüche, **dadurch gekennzeichnet, dass** jeder Aktuatorkammer (9a, 9b, 10a, 10b) genau ein Proportionalventil (25) zugeordnet ist.

7. Stabilisierungssystem nach einem oder mehreren der vorangegangenen Ansprüche, **dadurch gekennzeichnet, dass** das Stabilisierungssystem (1) als Zweikreis- oder als Vierkreis-Hydrauliksystem ausgebildet ist, wobei jeder Aktuatorkammer (9a, 9b, 10a, 10b) ein Hydraulikkreis zugeordnet ist.

8. Stabilisierungssystem nach einem oder mehreren der vorangegangenen Ansprüche, **dadurch gekennzeichnet, dass** von Durchgangsleitungen (20a, 20b), welche mit einer Aktuatorkammern (9a, 9b) eines Aktuators (9) verbunden sind, Zweigleitungen (22a, 22b) abgehen, in denen jeweils zumindest zwei Proportionaldruckbegrenzungsventile (25) in Reihe geschaltet angeordnet sind, wobei zwischen den Proportionaldruckbegrenzungsventilen (25) jeweils eine Leitung (21a, 21b) einendig mit einer der Zweigleitungen (22a, 22b) verbunden ist und anderendig einer korrespondierenden Aktuatorkammer (10a, 10b) eines zweiten Aktuators (10) zugeordnet ist.

9. Stabilisierungssystem nach einem oder mehreren der vorangegangenen Ansprüche, **dadurch gekennzeichnet, dass** das Proportionalwegeventil (50) eine Proportionalität zwischen dem Steuerstrom und dem Weg eines hydraulischen Steuerschiebers (52) aufweist.
